(19) Europäisches Patentamt
European Patent Office
Office européen des brevets

(11) EP 1 896 620 B1

(12) EUROPÄISCHE PATENTSCHRIFT

(45) Veröffentlichungstag und Bekanntmachung des Hinweises auf die Patenterteilung:
**23.03.2016 Patentblatt 2016/12**

(21) Anmeldenummer: **06763840.3**

(22) Anmeldetag: **22.06.2006**

(51) Int Cl.:
***C14C 9/02*** *(2006.01)* ***C08F 220/06*** *(2006.01)*
***C09D 4/06*** *(2006.01)*

(86) Internationale Anmeldenummer:
**PCT/EP2006/063447**

(87) Internationale Veröffentlichungsnummer:
**WO 2006/136595 (28.12.2006 Gazette 2006/52)**

(54) **VERFAHREN ZUR HERSTELLUNG VON LEDER**
METHOD FOR PRODUCING LEATHER
PROCEDE DE FABRICATION DE CUIR

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **23.06.2005 DE 102005029627**

(43) Veröffentlichungstag der Anmeldung:
**12.03.2008 Patentblatt 2008/11**

(73) Patentinhaber: **BASF SE**
**67056 Ludwigshafen (DE)**

(72) Erfinder:
- **PETROVIC, Susanne**
**67063 Ludwigshafen (DE)**
- **SEITZ, Andreas**
**67134 Birkenheide (DE)**
- **DANISCH, Peter**
**67065 Ludwigshafen (DE)**
- **BETHGE, Hartmut**
**67063 Ludwigshafen (DE)**
- **JANSON, Werner**
**67098 Bad Dürkheim (DE)**
- **BELL, Hubertus, Peter**
**68165 Mannheim (DE)**

(56) Entgegenhaltungen:
**EP-A- 0 085 334** **DE-A1- 3 926 167**
**DE-B1- 2 629 748**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 896 620 B1

Printed by Jouve, 75001 PARIS (FR)

## Beschreibung

Die vorliegende Erfindung betrifft ein Verfahren zur Herstellung von Leder, dadurch gekennzeichnet, dass man gegerbte Tierhäute in Schritt (A) mit einer wässrigen Flotte behandelt, die enthält

(a) mindestens ein Copolymer, erhältlich durch Copolymerisation von
(a1) mindestens einer ethylenisch ungesättigten $C_4$-$C_8$-Dicarbonsäure oder mindestens eines Derivats einer ethylenisch ungesättigten $C_4$-$C_8$-Dicarbonsäure und
(a2) mindestens eines $C_8$-$C_{100}$-$\alpha$-Olefins und gegebenenfalls Hydrolyse und/oder zumindest partielle Neutralisation,
(b) mindestens ein bei Zimmertemperatur flüssiges Paraffin,
(c) gegebenenfalls mindestens einen synthetischen nichtionischen Emulgator,

und wobei die wässrige Flotte frei ist von Silikonen.

Weiterhin betrifft die vorliegende Erfindung silikonfreie und von nativen Fetten freie wässrige Formulierungen und ihre Verwendung.

Die Anforderungen an Leder sind in den vergangenen Jahren stark gestiegen. Insbesondere legt man verstärkten Wert auf gute physikalische Echtheiten wie Lichtechtheit, weiterhin geringes Fogging (Ausdampfen flüchtiger Bestandteile aus dem Leder), geringe Wärmevergilbung, geringen VOC (Volatile organic compounds) und Geruchsfreiheit.

Bei einer konventionellen Fettung von Leder mit natürlichen Fetten oder Ölen wird häufig beobachtet, dass sich das gefettete Leder mit der Zeit nachteilig verändert. Es kann beispielsweise vergilben, insbesondere in der Wärme, einen unangenehmen Geruch bekommen oder nachträglich verhärten. Außerdem beobachtet man nach einer gewissen Zeit des Gebrauchs mitunter ein starkes Ausblühen von natürlichen Fetten oder Ölen. Darüber hinaus bereitet es oft Schwierigkeiten, mit nativ gefetteten Ledern die Anforderungen der Automobilindustrie hinsichtlich Fogging, d. h. FOG oder VOC und Migration zu erfüllen. (Fogging DIN 75201/ISO6452; static Headspace RAL-GZ 479 / VDA 277 (PV 3341); dynamic Headspace PB VWL 709 (Method of Daimler-Chrysler)) (Migrationsechtheit DIN 3353; Tropentest: Migration und Alterungsbeständigkeit, BASF Methode (48h bei 100°C/ 48h bei55°C und 95% Luftfeuchtigkeit)) Vollsynthetische Fettungsmittel, die auf den Einsatz nativer Komponenten verzichten um gute physikalische Echtheiten der hergestellten Leder zu garantieren, erzielen meist auf Leder keine zufriedenstellende Weichheit.

Eine grundsätzliche Schwierigkeit in der Herstellung weicher Leder besteht außerdem darin, die Leder nicht losnarbig werden zu lassen. Oft beobachtet man, dass je weicher ein Leder wird, die Losnarbigkeit umso mehr zunimmt.

Eine weitere Schwierigkeit beim Einsatz nativer Fettungsmittel tritt beim Fetten von hydrophobierten Ledern auf. Nach einem verbreiteten Test, dem Maesertest, muss Leder ausreichender Qualität mindestens 15.000 sogenannte Maeserflexe überstehen können, bevor sich ein signifikanter Wasserdurchtritt nachweisen lässt. Viele native Fettungsmittel stören die Hydrophobierung, .d.h. die üblicherweise mit einer bestimmten Arbeitsweise erreichbaren Maeserwerte lassen sich nicht mehr erreichen, wenn das Leder in der Nachgerbung mit nativen Fett behandelt wurde.

Mit rein polymeren Hydrophobiermitteln lassen sich gute Maeserwerte ebenfalls nicht zuverlässig erreichen. Gründe liegen beispielsweise an der wechselnden Qualität des Leders, die beispielsweise durch die Qualität der Rohhaut beeinflusst wird, weiterhin beispielsweise durch die Wasserqualität, insbesondere die Härte des beim Gerben verwendeten Wassers, und weitere Einflussgrößen. Mit Silikonen kann man vielfach eine bessere Qualität erreichen; aufgrund der im Vergleich zu Polymerlickern höheren Preise von Silikonen sind aufwändige Hydrophobierschritte mit Silikonen jedoch nur dann wirtschaftlich, wenn man hochwertiges Leder für hochpreisige Anwendungen herzustellen wünscht.

Im übrigen wird beobachtet, dass bei der Anwendung von Silikonen zur Hydrophobierund häufig Leder erhalten wird, das zur Losnarbigkeit neigt.

In DE 26 29 748 werden Copolymerisate aus Maleinsäureanhydrid und Monoolefinen wie beispielsweise eines $\alpha$-Olefins mit einer mittleren Kettenlänge von 14 bis 18 C-Atomen offenbart, die zum Füllen und Fetten von Leder eingesetzt werden. Die betreffenden Copolymerisate werden in einem organischen Lösungsmittel hergestellt wie beispielsweise Paraffin oder Dialkylbenzol. Durch die Aufarbeitung ist nicht sichergestellt, dass das betreffende organische Lösungsmittel vollständig abgetrennt wird.

DE 39 26 167 A1 betont, dass es wichtig sei, dass die verwendeten Copolymerisate auf Basis von langkettigen Olefinen und ethylenisch ungesättigten Dicarbonsäureanhydriden frei von organischen Lösemitteln sind, wenn man sie zum Hydrophobieren von Leder und Pelzfellen einzusetzen wünscht. DE 39 26 167 A1 schlägt deshalb vor, durch Substanzpolymerisation hergestellte Copolymerisate auf Basis von langkettigen Olefinen und ethylenisch ungesättigten Dicarbonsäureanhydriden einzusetzen.

WO 95/20056 schlägt vor, wässrige Lösungen oder Dispersionen von Copolymerisaten zum Fetten und Füllen von Leder einzusetzen, wobei die Lösungen oder Dispersionen Emulgator enthalten und Copolymerisat, das beispielsweise hergestellt wird aus monoethylenisch ungesättigten $C_4$-$C_{12}$-Dicarbonsäureanhydriden und $C_6$-$C_{40}$-Monoolefinen. Es wird kein merklicher Hydrophobiereffekt beobachtet (Seite 8, Zeile 35 - 39). Als vorteilhaft wird betont, dass keine

organischen Lösungsmittel mitverwendet werden.

Es bestand die Aufgabe, ein Verfahren bereit zu stellen, weiche Leder mit ausgezeichneten physikalischen Echtheiten herzustellen, mit dem man die aus dem Stand der Technik bekannten Nachteile vermeidet. Es bestand weiterhin die Aufgabe, Formulierungen bereit zu stellen, mit deren Hilfe man weiche Leder mit besonders guten physikalischen Echtheiten herstellen kann.

Demgemäß wurde das eingangs definierte Verfahren gefunden.

Das erfindungsgemäße Verfahren ist dadurch gekennzeichnet, dass man gegerbte Tierhäute in Schritt (A) mit einer wässrigen Flotte behandelt, die enthält

(a) mindestens ein Copolymer, erhältlich durch Copolymerisation von
(a1) mindestens einer ethylenisch ungesättigten $C_4$-$C_8$-Dicarbonsäure oder mindestens eines Derivats einer ethylenisch ungesättigten $C_4$-$C_8$-Dicarbonsäure und
(a2) mindestens eines $C_8$-$C_{100}$-$\alpha$-Olefins und gegebenenfalls Hydrolyse und/oder zumindest partielle Neutralisation,
(b) mindestens ein bei Zimmertemperatur flüssiges Paraffin,
(c) gegebenenfalls mindestens einen synthetischen nichtionischen Emulgator,

und wobei die wässrige Flotte frei ist von Silikonen.

Tierhäute können beispielsweise vom Rind, Kalb, Schwein oder beliebigen anderen Tieren stammen. Bei gegerbten Tierhäuten kann es sich um ganze Tierhäute oder auch um Teile von Tierhäuten handeln, beispielsweise um Streifen oder Hälften von Tierhäuten.

Das erfindungsgemäße Verfahren geht aus von nach beliebigen Verfahren gegerbten Tierhäuten, beispielsweise durch Polymergerbung, enzymatische Gerbung, mineralische Gerbung, insbesondere Chromgerbung mit einer oder mehreren Cr(III)-Verbindungen, Gerbung mit Carbonylverbindungen wie beispielsweise Glutardialdehyd, Gerbung mit Syntanen oder vegetabilischen Gerbstoffen, Harzgerbstoffen oder Kombinationen der vorgenannten Gerbverfahren. Bevorzugt geht man von beispielsweise durch Chromgerbung mit einer oder mehreren Cr(III)-Verbindungen, Gerbung mit Harzgerbstoffen oder mit Carbonylverbindungen wie beispielsweise Glutardialdehyd gegerbten Tierhäuten aus. Als Ausgangsmaterial für das erfindungsgemäße Verfahren eingesetzte Tierhäute können bereits einem oder mehreren Nachgerbschritten unterworfen worden sein.

In einer bevorzugten Ausführungsform der vorliegenden Erfindung handelt es sich bei gegerbten Tierhäuten um mit Cr(III)-Verbindungen gegerbte Tierhaut (wet blue).

In einer anderen bevorzugten Ausführungsform der vorliegenden Erfindung handelt es sich bei gegerbten Tierhäuten Chrom-frei, insbesondere um mit Carbonylverbindungen wie beispielsweise Glutardialdehyd gegerbte Tierhaut (wet white).

Das erfindungsgemäße Verfahren führt man in wässriger Flotte durch, beispielsweise mit einem Flottenverhältnis im Bereich von 100 bis 300 Gew.-%, bezogen auf das Falzgewicht.

Im erfindungsgemäßen Verfahren eingesetzte wässrige Flotte kann einen pH-Wert im Bereich von 4,2 bis 9,5, bevorzugt 4,5 bis 7 aufweisen.

Im erfindungsgemäßen Verfahren in Schritt (A) eingesetzte wässrige Flotte ist frei von Silikonen, d.h. man hat die in Schritt (A) eingesetzte wässrige Flotte weder mit einem noch mit mehreren Silikonen versetzt.

In einer speziellen Ausführungsform der vorliegenden Erfindung ist die in Schritt (A) eingesetzte Flotte frei von nativen Fetten, d.h. man hat die in Schritt (A) eingesetzte wässrige Flotte weder mit einem noch mit mehreren nativen Fetten versetzt.

In einer Ausführungsform der vorliegenden Erfindung führt man das erfindungsgemäße Verfahren bei einer Temperatur im Bereich von 10 bis 65°C durch, bevorzugt 20 bis 40°C.

Das erfindungsgemäße Verfahren kann man in gerbereiüblichen Gefäßen durchführen, beispielsweise durch Walken in Fässern, beispielsweise in Fässern mit Einbauten, oder in gedrehten Trommeln.

Die in Schritt (A) eingesetzte wässrige Flotte enthält

(a) mindestens ein Copolymer, erhältlich durch Copolymerisation von

(a1) mindestens einer ethylenisch ungesättigten $C_4$-$C_8$-Dicarbonsäure, beispielsweise Maleinsäure, Fumarsäure, Itaconsäure, Metaconsäure, Citraconsäure, bevorzugt Maleinsäure, oder eines Derivats einer ethylenisch ungesättigten $C_4$-$C_8$-Dicarbonsäure, beispielsweise des Di- oder vorzugsweise Mono-$C_1$-$C_{10}$-Alkylesters und insbesondere des Anhydrids. Bevorzugte (a1) sind Itaconsäureanhydrid, Citraconsäureanhydrid und ganz besonders bevorzugt Maleinsäureanhydrid,

(a2) mindestens eines $C_8$-$C_{100}$-$\alpha$-Olefins, verzweigt oder unverzweigt, beispielsweise Diisobuten, $\alpha$-$C_{10}H_{20}$, $\alpha$-$C_{12}H_{24}$, $\alpha$-$C_{14}H_{28}$, $\alpha$-$C_{16}H_{32}$, $\alpha$-$C_{18}H_{36}$, $\alpha$-$C_{20}H_{40}$, $\alpha$-$C_{22}H_{44}$, $\alpha$-$C_{24}H_{48}$, $\alpha$-$C_{30}H_{60}$, $\alpha$-$C_{40}H_{80}$, $\alpha$-Triisobuten, $\alpha$-Te-

traisobuten, und Polyisobuten mit einem mittleren Molekulargewicht $M_w$ im Bereich von 250 bis 1000 g/mol. Besonders bevorzugt sind $\alpha$-$C_{10}H_{20}$, $\alpha$-$C_{12}H_{24}$, $\alpha$-$C_{14}H_{28}$, $\alpha$-$C_{16}H_{32}$, $\alpha$-$C_{18}H_{36}$, $\alpha$-$C_{20}H_{40}$, $\alpha$-$C_{22}H_{44}$, $\alpha$-$C_{24}H_{48}$ und $\alpha$-$C_{30}H_{60}$.

Im Anschluss an die Copolymerisation kann man Hydrolysieren und/oder zumindest partiell neutralisieren, beispielsweise durch Umsetzung mit basischer Alkalimetallverbindung, mit Ammoniak oder mit einem oder mehreren organischen Aminen. Es ist bevorzugt, mit wässriger Lösung von basischer Alkalimetallverbindung in einem Schritt zu hydrolysieren und zumindest partiell oder quantitativ zu neutralisieren.

Bevorzugte wässrige Lösungen von basischer Alkalimetallverbindung sind beispielsweise wässrige Kalilauge, wässrige Natronlauge, wässrige Lösung von Natrium- oder Kaliumcarbonat oder Natrium-oder Kaliumhydrogencarbonat.

Weitere geeignete Basen sind Amine, unsubstituiert oder substituiert mit einem bis zu vier gleichen oder verschiedenen organischen Resten. Geeignete organische Reste sind beispielsweise Phenyl,

$C_1$-$C_{10}$-Alkyl, ausgewählt aus Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Arnyl, n-Hexyl, iso-Hexyl, sec.-Hexyl, n-Heptyl, iso-Heptyl, n-Octyl, n-Nonyl, n-Decyl, bevorzugt lineares $C_1$-$C_6$-Alkyl wie Methyl, Ethyl, n-Propyl, n-Butyl, n-Pentyl, n-Hexyl, iso-Hexyl, sec.-Hexyl, besonders bevorzugt $C_1$-$C_4$-Alkyl wie Methyl, Ethyl, n-Propyl, n-Butyl, ganz besonders bevorzugt Methyl und Ethyl,

und $\omega$-Hydroxy-$C_1$-$C_4$-Alkyl, beispielsweise 4-Hydroxybutyl, 3-Hydroxypropyl und insbesondere 2-Hydroxyethyl.

Ganz besonders bevorzugte Amine sind Ammoniak, Diethylamin, Triethylamin, Diethanolamin, *N*-Methyl-diethanolamin, *N*-Methyl-ethanolamin, *N*-n-butyl-diethanolamin, *N*-n-butylethanolamin, *N,N*-Dimethylethanolamin.

In einer Ausführungsform der vorliegenden Erfindung hat Copolymer (a) ein mittleres Molekulargewicht $M_w$ im Bereich von 800 bis 50.000 g/mol, bevorzugt 1.000 bis 20.000 g/mol, bestimmt durch Gelpermeationschromatographie des korrespondierenden nicht hydrolysierten Copolymers in THF (Tetrahydrofuran) mit Polystyrol-Kalibrierung.

In einer Ausführungsform der vorliegenden Erfindung liegt das Molverhältnis von (a1) zu (a2) im Bereich von 0,8 : 1 bis 2 : 1.

Die Herstellung von im erfindungsgemäßen Verfahren eingesetzten Copolymeren (a) ist an sich bekannt. Sie kann beispielsweise durch radikalische Copolymerisation der Comonomere (a1) und (a2) bei Temperaturen im Bereich von 50 bis 250°C, bevorzugt im Bereich von 80 bis 200°C erfolgen. Man kann im erfindungsgemäßen Verfahren eingesetzte Copolymere (a) durch Copolymerisation in Substanz oder in Lösung, beispielsweise in einem bei Zimmertemperatur flüssigen Paraffin, herstellen.

Wünscht man zumindest partiell zu neutralisieren, so kann man beispielsweise bei Temperaturen im Bereich von vorzugsweise 20 bis 150°C mit Wasser oder wässriger Base umsetzen. Der bevorzugte Temperaturbereich für die Hydrolyse beträgt 60 bis 100°C.

Vorzugsweise hydrolysiert man vollständig oder zu mindestens 95 mol-%.

Beispiele für Copolymere (a) sind gegebenenfalls hydrolysierte und zumindest partiell mit Natronlauge neutralisierte Copolymere von

1 mol Maleinsäureanhydrid und 0,9 mol Diisobuten
1 mol Maleinsäureanhydrid und 1 mol Diisobuten
1 mol Maleinsäureanhydrid und 0,8 mol $\alpha$-$C_{10}H_{20}$
1 mol Maleinsäureanhydrid und 1 mol $\alpha$-$C_{10}H_{20}$
1 mol Maleinsäureanhydrid und 1 mol $\alpha$-$C_{12}H_{24}$
1 mol Maleinsäureanhydrid und 1 mol $\alpha$-$C_{16}H_{32}$
1 mol Maleinsäureanhydrid und 1 mol $\alpha$-$C_{18}H_{36}$
1 mol Itaconsäureanhydrid und 1 mol $\alpha$-$C_{18}H_{36}$
1 mol Maleinsäureanhydrid und 1 mol n-$C_{20-24}$-Olefin
1 mol Maleinsäureanhydrid und 0,1 mol $\alpha$-$C_{10}H_{20}$ und 0,9 mol $\alpha$-$C_{30}H_{60}$
1 mol Maleinsäureanhydrid und 0,3 mol $\alpha$-$C_{12}H_{24}$ und 0,7 mol n-$C_{20-24}$-Olefin
1 mol Maleinsäureanhydrid und 0,7 mol $\alpha$-$C_{12}H_{24}$ und 0,3 mol Polyisobuten mit Molekulargewicht $M_w$ 500 g/mol,
1 mol Maleinsäureanhydrid und 0,3 mol $\alpha$-$C_{12}H_{24}$ und 0,7 mol n-$C_{20-24}$-Olefin
1 mol Maleinsäureanhydrid und 0,6 mol $\alpha$-$C_{12}H_{24}$ und 0,4 mol n-$C_{20-24}$-Olefin
1 mol Maleinsäureanhydrid und 0,5 mol $\alpha$-$C_{16}H_{32}$ und 0,5 mol n-$C_{20-24}$-Olefin
1 mol Maleinsäureanhydrid und 0,7 mol $\alpha$-$C_{18}H_{36}$ und 0,3 mol n-$C_{20-24}$-Olefin
1 mol Maleinsäureanhydrid und 0,9 mol n-$C_{20-24}$-Olefin und 0,1 mol Polyisobuten mit Molekulargewicht $M_w$ 500 g/mol.

Dabei stehen Angaben in mol jeweils für das Molverhältnis.

Zur Durchführung des erfindungsgemäßen Verfahren setzt man weiterhin mindestens ein bei Zimmertemperatur flüssiges Paraffin (b) ein, auch Paraffinöl genannt. Zu bei Zimmertemperatur flüssigen Paraffinen zählen jeweils bei Zimmertemperatur flüssige Rohparaffinöle, Gatschraffinate, entölte Rohparaffine, halb-oder vollraffinierte Paraffinöle und gebleichte Paraffinöle. Unter Paraffinen werden im Zusammenhang mit der vorliegenden Erfindung gesättigte Kohlenwasserstoffe verstanden, verzweigt oder vorzugsweise linear, cyclisch oder vorzugsweise acyclisch, einzeln oder vorzugsweise als Gemisch von mehreren gesättigten Kohlenwasserstoffen. Paraffine im Zusammenhang mit der vorliegenden Erfindung sind vorzugsweise Gemische von gesättigten $C_6$-$C_{30}$-Kohlenwasserstoffen, insbesondere Gemische von gesättigten $C_8$-$C_{30}$-Kohlenwasserstoffen.

In einer Ausführungsform der vorliegenden Erfindung wählt man bei Zimmertemperatur flüssiges Paraffin (b) aus Gemischen von gesättigten $C_6$-$C_{30}$-Kohlenwasserstoffen, insbesondere Gemische von gesättigten $C_8$-$C_{30}$-Kohlenwasserstoffen, von denen weniger als 10 Gew.-%, bevorzugt weniger als 5 Gew.-% und besonders bevorzugt weniger als 2 Gew.-% verzweigt sind und der Rest linear, bestimmbar beispielsweise durch Gaschromatographie.

In einer Ausführungsform der vorliegenden Erfindung wählt man bei Zimmertemperatur flüssiges Paraffin (b) aus Gemischen von gesättigten $C_6$-$C_{30}$-Kohlenwasserstoffen, insbesondere Gemische von gesättigten $C_8$-$C_{30}$-Kohlenwasserstoffen, von denen weniger als 5 Gew.-% und bevorzugt weniger als 2 Gew.-% cyclisch sind und der Rest acyclisch.

In einer Ausführungsform der vorliegenden Erfindung hat bei Zimmertemperatur flüssiges Paraffin (b) eine dynamische Viskosität im Bereich von 0,3 bis 100 mPa·s, bevorzugt 0,4 bis 50 mPa·s, besonders bevorzugt 0,5 bis 10 mPa·s, gemessen bei 20°C.

In einer Ausführungsform der vorliegenden Erfindung hat bei Zimmertemperatur flüssiges Paraffin (b) einen breiten Siedebereich von 70 bis 250°C, bevorzugt 125 bis 230°C, bestimmt bei Normaldruck.

Zur Durchführung des erfindungsgemäßen Verfahren kann man weiterhin mindestens einen synthetischen nichtionischen Emulgator (c) einsetzen, der in einer Ausführungsform der vorliegenden Erfindung einen HLB-Wert im Bereich von 1 bis 20, bevorzugt bis 18 haben kann (Hydrophil-lipophil-Wert, bestimmt nach

$$HLB = 20\frac{M_H}{M_{ges}}$$

mit $M_H$ = Molekulargewicht des hydrophilen Molekülteils und $M_{ges}$= Molekulargewicht des gesamten Emulgatormoleküls, beschrieben in H. Stache, Tensidtaschenbuch, Carl Hanser Verlag, München, 1981.

Man. kann in einer anderen Ausführungsform der vorliegenden Erfindung synthetischen nichtionischen Emulgator (c) bei der Durchführung des erfindungsgemäßen Verfahrens weglassen.

In einer bevorzugten Ausführungsform setzt man zur Durchführung des erfindungsgemäßen Verfahrens mindestens zwei verschiedene synthetische nichtionische Emulgatoren (c1) und (c2) ein, von denen in einer Ausführungsform der vorliegenden Erfindung einer einen HLB-Wert im Bereich von 1 bis 10 und der anderen einen HLB-Wert im Bereich von 10 bis 20, bevorzugt bis 18 aufweisen kann. Dabei achtet man in dem Falle, dass man zwei verschiedene synthetische nichtionische Emulgatoren (b) einzusetzen wünscht, darauf, dass mindestens ein synthetischer nichtionischer Emulgator einen HLB-Wert aufweist, der von 10 verschieden ist.

In einer Ausführungsform der vorliegenden Erfindung wählt man nichtionische synthetische Emulgatoren (c) aus mehrfach alkoxylierten Fettalkoholen, mehrfach alkoxylierten Oxoalkoholen, mehrfach alkoxylierten Fettsäuren, mehrfach alkoxylierten Fettsäureamiden, mehrfach alkoxylierten nicht-quaternierten Fettsäureaminen, mehrfach alkoxylierte Mono- und Diglyceride sowie gegebenenfalls mehrfach alkoxylierte Alkylpolyglykoside, vorzugsweise gewählt aus Alkylpolyglucosiden und Zuckeresteralkoxylaten.

Beispiele für besonders geeignete Fettalkohole und mehrfach alkoxylierte Oxoalkohole sind solche der allgemeinen Formel

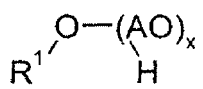

I

in denen die Variablen wie folgt definiert sind:

- $R^1$ verzweigtes oder unverzweigtes $C_6$-$C_{30}$-Alkyl oder $C_6$-$C_{30}$-Alkenyl, bevorzugt $C_8$-$C_{20}$-Alkyl oder $C_8$-$C_{20}$-Alkenyl, wobei $C_6$-$C_{30}$-Alkenyl eine oder mehrere C-C-Doppelbindungen aufweisen kann, die vorzugsweise (Z)-Konfiguration aufweisen kann bzw. können,

APO $C_2$-$C_4$-Alkylenoxid, gleich oder verschieden, beispielsweise Butylenoxid $CH(C_2H_5)CH_2O$, Propylenoxid $CH(CH_3)CH_2O$ und insbesondere Ethylenoxid $CH_2CH_2O$,

x eine Zahl im Bereich von 2 bis 100, wobei x als Mittelwert (Zahlenmittel) auch eine nicht-ganze Zahl sein kann, bevorzugt im Bereich von 2 bis 90 und besonderes bevorzugt von 2,5 bis 80.

Dabei können für den Fall, dass AO für verschiedene Alkylenoxide steht, die verschiedenen Alkylenoxide in Blöcken oder statistisch angeordnet sein.
Beispiele für besonders geeignete mehrfach alkoxylierten Fettalkohole und Oxoalkohole sind

$n\text{-}C_{18}H_{37}O\text{-}(CH_2CH_2O)_{80}\text{-}H$,

$n\text{-}C_{18}H_{37}O\text{-}(CH_2CH_2O)_{70}\text{-}H$,

$n\text{-}C_{13}H_{37}O\text{-}(CH_2CH_2O)_{60}\text{-}H$,

$n\text{-}C_{18}H_{37}O\text{-}(CH_2CH_2O)_{50}\text{-}H$,

$n\text{-}C_{18}H_{37}O\text{-}(CH_2CH_2O)_{25}\text{-}H$,

$n\text{-}C_{18}H_{37}O\text{-}(CH_2CH_2O)_{12}\text{-}H$,

$n\text{-}C_{16}H_{33}O\text{-}(CH_2CH_2O)_{80}\text{-}H$,

$n\text{-}C_{16}H_{33}O\text{-}(CH_2CH_2O)_{70}\text{-}H$,

$n\text{-}C_{16}H_{33}O\text{-}(CH_2CH_2O)_{60}\text{-}H$,

$n\text{-}C_{16}H_{33}O\text{-}(CH_2CH_2O)_{50}\text{-}H$,

$n\text{-}C_{16}H_{33}O\text{-}(CH_2CH_2O)_{25}\text{-}H$,

$n\text{-}C_{16}H_{33}O\text{-}(CH_2CH_2O)_{12}\text{-}H$,

$n\text{-}C_{12}H_{25}O\text{-}(CH_2CH_2O)_{11}\text{-}H$,

$n\text{-}C_{12}H_{25}O\text{-}(CH_2CH_2O)_{13}\text{-}H$,

$n\text{-}C_{12}H_{25}O\text{-}(CH_2CH_2O)_{25}\text{-}H$,

$n\text{-}C_{12}H_{25}O\text{-}(CH_2CH_2O)_{50}\text{-}H$,

$n\text{-}C_{12}H_{25}O\text{-}(CH_2CH_2O)_{80}\text{-}H$,

$n\text{-}C_{30}H_{61}O\text{-}(CH_2CH_2O)_{8}\text{-}H$,

$n\text{-}C_{10}H_{21}O\text{-}(CH_2CH_2O)_{9}\text{-}H$,

$n\text{-}C_{10}H_{21}O\text{-}(CH_2CH_2O)_{7}\text{-}H$,

$n\text{-}C_{10}H_{21}O\text{-}(CH_2CH_2O)_{5}\text{-}H$,

$n\text{-}C_{10}H_{21}O\text{-}(CH_2CH_2O)_{3}\text{-}H$,

und Mischungen der vorstehend genannten Emulgatoren, beispielsweise Mischungen von $n\text{-}C_{18}H_{37}O\text{-}(CH_2CH_2O)_{50}\text{-}H$ und $n\text{-}C_{16}H_{33}O\text{-}(CH_2CH_2O)_{50}H$,

wobei die Indices jeweils als Mittelwerte (Zahlenmittel) aufzufassen sind.

Mehrfach alkoxylierte Fettsäuren und mehrfach alkoxylierte Fettsäureamide sind vor-, zugsweise gewählt aus Verbindungen der allgemeinen Formeln II a und II b

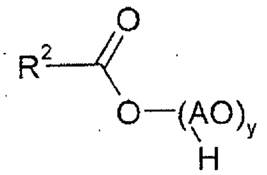

II a

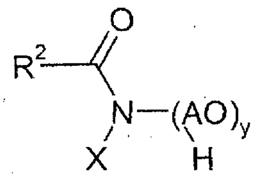

II b

wobei

- $R^2$ gewählt wird aus geradkettigem oder verzweigtem $C_5$-$C_{29}$-Alkyl oder $C_5$-$C_{29}$-Alkenyl, bevorzugt $C_7$-$C_{19}$-Alkyl oder $C_7$-$C_{19}$-Alkenyl, wobei $C_5$-$C_{29}$-Alkenyl eine oder mehrere C-C-Doppelbindungen aufweisen kann, die vorzugsweise (Z)-Konfiguration aufweisen kann bzw. können,
- y eine Zahl im Bereich von 1 bis 50, wobei y als Mittelwert (Zahlenmittel) auch eine nicht-ganze Zahl sein kann, bevorzugt im Bereich von 3 bis 48,
- X Wasserstoff oder $(AO)_t$-H, wobei t eine Zahl im Bereich von 1 bis 50 ist, wobei t als Mittelwert (Zahlenmittel) auch eine nicht-ganze Zahl sein kann, bevorzugt im Bereich von 3 bis 48, und wobei y und t verschieden oder vorzugsweise gleich sein können.

Beispiele für Verbindungen der allgemeinen Formel II a sind mit im Mittel 5,5 Äquivalenten Ethylenoxid alkoxylierten Ölsäure, mit im Mittel 3 bis 10 Äquivalenten ethoxylierte Talgölfettsäure und mit im Mittel 35 bis 48 Äquivalenten ethoxyliertes Ricinusöl, wobei die Mittelwerte jeweils auf Zahlenmittel bezogen sind.

Beispiele für Verbindungen der allgemeinen Formel II b sind Ölsäureamidmonodecaethoxylat (AO = Ethylenoxid, y = 10, X = Wasserstoff) und Ölsäureamidbispentaethoxylat (AO = Ethylenoxid, y = 5, X = $(AO)_5$) und Ölsäureamidbisdecaethoxylat (AO = Ethylenoxid, y = 10, X = $(AO)_{10}$).

Beispiele für mehrfach alkoxylierte Fettsäureamine sind vorzugsweise gewählt aus Verbindungen der allgemeinen Formeln II c

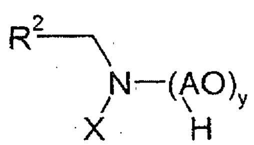

II c

wobei die Variablen wie vorstehend definiert sind.

Als Beispiele für mehrfach alkoxylierte Mono- und Diglyceride seien Verbindungen der allgemeinen Formeln III a bis III d genannt

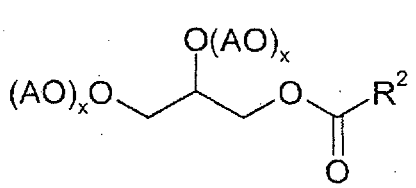

III a

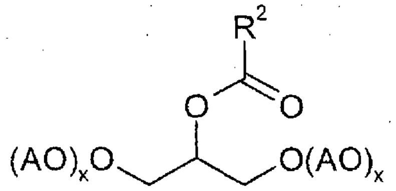

III b

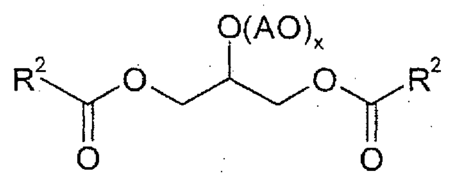

III c

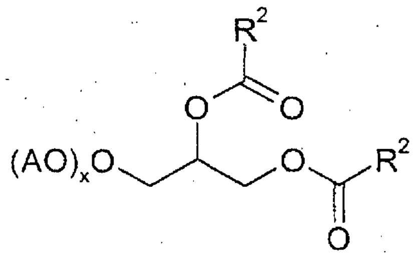

III d

bei denen $R^2$ und x verschieden oder vorzugsweise gleich sein können und wie vorstehend definiert sind.

Unter Alkylpolyglykosiden sind im Rahmen der vorliegenden Erfindung vorzugsweise an C1-Position mit $C_1$-$C_{20}$-Alkanol, bevorzugt mit $C_{12}$-$C_{20}$-Alkanol veretherte Zucker, insbesondere an C1-Position mit $C_1$-$C_{20}$-Alkanol, bevorzugt mit $C_{12}$-$C_{20}$-Alkanol veretherte Glucose zu verstehen. Aufgrund des Herstellungsprozesses sind Alkylpolyglykoside in der Regel mit C1-C6-verknüpften Di- und Polyglykosiden verunreinigt, die gegebenenfalls mit $C_1$-$C_{20}$-Alkanol verethert sind. In einer Ausführungsform der vorliegenden Erfindung sind 1,3 Äquivalente Zucker mit einem Äquivalent $C_1$-$C_{20}$-Alkanol verknüpft.

Unter Zuckeresteralkoxylaten sind im Rahmen der vorliegenden Erfindung vorzugsweise ein- oder mehrfach mit Fettsäuren veresterte und mit 5 bis 80 Äquivalenten Alkylenoxid, insbesondere mit Ethylenoxid alkoxylierte Zuckeralkohole zu verstehen. Bevorzugte Zuckeresteralkoxylate sind gewählt aus alkoxylierten Sorbitanfettsäuren, vorzugsweise ein- oder mehrfach mit Fettsäuren verestertes und mit 5 bis 80 Äquivalenten Alkylenoxid, insbesondere Ethylenoxid alkoxyliertes Sorbit.

In einer Ausführungsform der vorliegenden Erfindung entfernt man nach Durchführung von Schritt (A) erfindungsgemäß behandelte gegerbte Tierhaut von der Flotte, beispielsweise indem man die Flotte ablässt.

In einer anderen Ausführungsform der vorliegenden Erfindung führt man nach der Durchführung von Schritt (A) einen Schritt (B) durch, indem man mindestens eine Silikonverbindung (d) zusetzt. Dazu geht man vorzugsweise so vor, dass man mindestens eine Silikonverbindung (d) der Flotte zusetzt, ohne erfindungsgemäß behandelte gegerbte Tierhaut von der Flotte von Schritt (A) zu entfernen.

Geeignete Silikonverbindungen (d) sind beispielsweise Carboxylgruppen-haltige Silikonverbindungen und Gemische von mindestens einer Carboxylgruppen-haltigen Silikonverbindung und einer Carboxylgruppen-freien Silikonverbindung.

Beispiele für als Silikonverbindung (d) geeignete Carboxylgruppen-haltige Silikonverbindungen tragen pro Molekül im Mittel (Zahlenmittel) mindestens eine beispielsweise eine bis 100, bevorzugt bis 10 Carboxylgruppen, die partiell oder quantitativ mit beispielsweise Alkali, beispielsweise Natrium, neutralisiert sein kann. Dabei kann bzw. können die Carboxylgruppe(n) beispielsweise über einen Spacer mit einer Polysiloxankette der Carboxylgruppen-haltigen Silikonverbindung(en) verbunden sein, und die Carboxylgruppe(n) kann bzw. können an beliebigen Stellen der Polysiloxankette der Carboxylgruppen-haltigen Silikonverbindung(en) sitzen.

In einer Ausführungsform der vorliegenden Erfindung weist mindestens eine Silikonverbindung (d) ein mittleres Molekulargewicht $M_n$ im Bereich von 500 bis 100.000 g/mol, bevorzugt 1.000 bis 50.000 g/mol auf.

In der Literatur sind zahlreiche Carboxylgruppen-haltige Silikonverbindungen beschrieben, die sich beispielsweise durch Art des Spacers, Zahl der COOH-Gruppen pro Molekül, Molekulargewicht und Struktur der Silikonkette unterscheiden können.

Beispielhaft genannt seien für Spacer:

$C_1$-$C_{100}$-Alkylen, bevorzugt $C_1$-$C_{20}$-Alkylen, beispielsweise $-CH_2-$, $-CH_2-CH_2-$, $-(CH_2)_3-$, $-(CH_2)_4-$, $-(CH_2)_5-$, $-(CH_2)_6-$, $-(CH_2)_7-$, $-(CH_2)_8-$, $-(CH_2)_9-$, $-(CH_2)_{10}-$, $-(CH_2)_{12}-$, $-(CH_2)_{14}-$, $-(CH_2)_{16}-$, $-(CH_2)_{18}-$, $-(CH_2)_{20}-$,

$C_1$-$C_{100}$-Alkylen, ein- oder mehrfach substituiert mit $C_1$-$C_4$-Alkyl oder $-CH_2$-COOH oder Phenyl, in dem ein oder mehrere nicht-benachbarte C-Atome gleich oder verschieden ersetzt sein können durch Sauerstoffatome oder NH-Gruppen, beispielsweise $-CH(CH_3)-$, $-CH(C_2H_5)-$, $-CH_2-CH(CH_3)-$, $-C(CH_3)_2-$, $-CH(C_6H_5)-$, $-CH_2-CH(C_2H_5)-$, $-CH_2-CH(CH[CH_3]_2)-$, $-CH_2-CH(n\text{-}C_3H_7)-$, $-[CH(CH_3)]_2-$, $-CH(CH_3)-CH_2-CH_2-CH(CH_3)-$, $-CH(CH_3)-CH_2-CH(CH_3)-$, $-CH_2-C(CH_3)_2-CH_2-$, $-CH_2-CH(n\text{-}C_4H_9)-$, $-CH_2-CH(t\text{-}C_4H_9)-$, $-CH_2-CH(C_6H_5)-$,

$-CH_2-O-$, $-CH_2-O-CH_2-$, $-CH_2CH_2-O-$, $-CH_2CH_2-O-CH_2CH_2-$, $-[CH_2CH_2-O]_2-(CH_2)_2-$, $-[CH_2CH_2-O]_3-CH_2CH_2-$,

$-CH-NH-$, $-(CH_2)_2-NH-$, $-(CH_2)_3-NH-$, $-(CH_2)_4-NH-$, $-(CH_2)_2-NH-CH_2-$, $-(CH_2)_2-NH-(CH_2)_2-$, $-(CH_2)_3-NH-(CH_2)_3-$.

Weitere geeignete Spacer sind $C_6$-$C_{20}$-Arylen, $C_7$-$C_{21}$-Alkylarylen und $C_5$-$C_{20}$-Cycloalkylen, beispielsweise *para*-Phenylen, *meta*-Phenylen, 1,7-Naphthylen, 2,6-Naphthylen, 2-Isopropyl-paraphenylen, 2-Methyl-*para*-phenylen, cis- oder *trans*-1,4-Cyclohexylen, cis- oder *trans*-1,2-Cyclohexylen, *cis*- oder trans-1,3-Cyclopentylen, *cis*- oder trans-1,2-Cyclopentylen.

Weitere Beispiele für geeignete Silikonverbindungen sind in WO 95/22627, EP-A 0 324 345, DE-A 42 40 274, EP-A 638 128, WO 98/21369, EP-A 1 510 554, EP-A 0 095 676, EP-A 0 299 596 und EP 0 415 204 beschrieben.

Geeignete Carboxylgruppen-freie Silikonverbindungen sind beispielsweise bei Zimmertemperatur flüssige Polydimethylsiloxane und Polymethylphenylsiloxane.

Silikonverbindung (d) kann man beispielsweise in einer oder mehreren Portionen zur Flotte aus Schritt (A) zusetzen.

Die Behandlung in Schritt (B) kann im Bereich von 30 bis 120 Minuten dauern.

Die Behandlung in Schritt (B) kann man bei dem gleichen pH-Wert durchführen wie die erfindungsgemäße Behandlung gemäß Schritt (A). Man kann jedoch auch einen pH-Wert wählen, der im Bereich von bis zu einer Einheit über oder unter dem pH-Wert liegt, bei dem Schritt (A) durchgeführt wird.

In einer Ausführungsform der vorliegenden Erfindung kann man 0,1 bis 5 Gew.-%, bevorzugt 0,2 bis 2 Gew.-% Silikonverbindung (d) zusetzen, bezogen auf zu behandelnde gegerbte Tierhaut (Falzgewicht).

Silikonverbindung (d) kann man in Substanz oder vorzugsweise in Form von einer oder mehreren vorzugsweise wässrigen Formulierungen zusetzen.

Während der Durchführung des erfindungsgemäßen Verfahrens kann man zusetzen, insbesondere nach der Durchführung von Schritt (A): einen oder mehrere übliche Lederfarbstoffe, einen oder mehrere Nachgerbstoffe, insbesondere Harzgerbstoffe oder vegetabile Gerbstoffe oder Sulfongerbstoffe, oder Mischungen der vorstehend genannten Nachgerbstoffe.

Im Anschluss an die Durchführung des erfindungsgemäßen Verfahrens kann man nach an sich bekannten Methoden waschen, färben oder fetten, oder sonstige an sich bekannte Arbeitsgänge zur Erzielung spezieller modischer Anforderungen anschließen.

Nach dem erfindungsgemäßen Verfahren hergestellte Leder zeichnen sich durch gute Weichheit und besonders Festnarbigkeit aus, weiterhin durch feinen Narben und gleichmäßige Färbung. Die Leder sind verglichen mit konventionell gefetteten oder hydrophobierten Ledern mit dem gleichen Weichheitsniveau deutlich festnarbiger und voller. Weiterhin beobachtet man insbesondere dann, wenn man auch Schritt (B) des erfindungsgemäßen Verfahrens durchgeführt hat, dass die so hergestellten Leder sehr gute Hydrophobie aufweisen, verglichen mit einer Behandlung ausschließlich nach Schritt (B) oder in von Anfang an Silikon-haltigen Flotten. Weiterhin beobachtet man nur geringe oder gar keine Wärmevergilbung, und die nach dem erfindungsgemäßen Verfahren hergestellten Leder sind sehr lichtecht und foggingarm, die Fogging-Werte, gravimetrisch nach DIN 75201 bestimmt, liegen in der Regel unter 5 mg. Nach dem erfindungsgemäßen Verfahren hergestelltes Leder eignet sich beispielsweise zur Herstellung von Schuhen und Bekleidungsstücken, aber auch zur Herstellung von Ledermöbeln mit exzellenten Lichtechtheiten.

Trotz der Verwendung von beispielsweise kurzkettigen Paraffine und nichtionischen Tensiden beobachtet man keine Nachteile bezüglich der Hydrophobierung.

Ein weiterer Gegenstand der vorliegenden Erfindung sind silikonfreie und von nativen Fetten freie wässrige Formulierungen, enthaltend

(a) mindestens ein Copolymer, erhältlich durch Copolymerisation von

(a1) mindestens einer ethylenisch ungesättigten $C_4$-$C_8$-Dicarbonsäure oder mindestens einem Derivat einer

ethylenisch ungesättigten $C_4$-$C_8$-Dicarbonsäure und
(a2) mindestens einem $C_8$-$C_{100}$-$\alpha$-Olefin

und gegebenenfalls Hydrolyse und/oder zumindest partielle Neutralisation,
(b) mindestens ein bei Zimmertemperatur flüssiges Paraffin,
(c) gegebenenfalls mindestens einen synthetischen nichtionischen Emulgator.

In einer Ausführungsform der vorliegenden Erfindung sind erfindungsgemäße wässrige Formulierungen wie folgt zusammengesetzt:

im Bereich von 5 bis 40 Gew.-%, bevorzugt 5 bis 25 Gew.-% Copolymer (a),
im Bereich von 0,1 bis 30 Gew.-%, bevorzugt 2 bis 20 Gew.-% bei Zimmertemperatur flüssiges Paraffin (b) und
im Bereich von insgesamt 0 bis 10 Gew.-%, bevorzugt 0,5 bis 8 Gew.-% synthetischen nichtionischen Emulgator (c),
wobei Angaben in Gew.-% jeweils auf die gesamte Formulierung bezogen sind. Der Rest ist vorzugsweise Wasser.

In einer Ausführungsform der vorliegenden Erfindung haben erfindungsgemäße Formulierungen einen Feststoffgehalt im Bereich von 5 bis 80 Gew.-%, vorzugsweise 10 bis 50 Gew.-%, besonders bevorzugt 20 bis 45 Gew.-%.

In einer speziellen Ausführungsform der vorliegenden Erfindung handelt es sich bei erfindungsgemäßen wässrigen Formulierungen um wässrige Emulsionen mit einem mittleren Tröpfchendurchmesser im Bereich von 200 nm bis 10 $\mu$m.

Ein weiterer Gegenstand der vorliegenden Erfindung ist ein Verfahren zur Herstellung von erfindungsgemäßen Formulierungen, im Folgenden auch erfindungsgemäßes Herstellungsverfahren genannt, dadurch gekennzeichnet, dass man

(a) mindestens ein Copolymer, erhältlich durch Copolymerisation von

(a1) mindestens einer ethylenisch ungesättigten $C_4$-$C_8$-Dicarbonsäure oder mindestens einem Derivat einer ethylenisch ungesättigten $C_4$-$C_6$-Dicarbonsäure und
(a2) mindestens einem $C_8$-$C_{100}$-$\alpha$-Olefin

und gegebenenfalls Hydrolyse und/oder zumindest partielle Neutralisation,
(b) mindestens ein bei Zimmertemperatur flüssiges Paraffin
(c) gegebenenfalls mindestens einen synthetischen nichtionischen Emulgator, miteinander vermischt, beispielsweise durch Verrühren.

In einer speziellen Variante des erfindungsgemäßen Herstellverfahrens vermischt man

(a) mindestens ein Copolymer, erhältlich durch Copolymerisation von

(a1) mindestens einer ethylenisch ungesättigten $C_4$-$C_8$-Dicarbonsäure oder mindestens einem Derivat einer ethylenisch ungesättigten $C_4$-$C_8$-Dicarbonsäure und

(a2) mindestens einem $C_8$-$C_{100}$-$\alpha$-Olefin

und gegebenenfalls Hydrolyse und/oder zumindest partielle Neutralisation,
(b) mindestens ein bei Zimmertemperatur flüssiges Paraffin und
(c) gegebenenfalls mindestens einen synthetischen nichtionischen Emulgator, mit Hilfe eines Ultra-Turrax.

Nach dem eigentlichen Vermischen kann man beispielsweise durch Leiten durch einen Spalthomogenisator erfindungsgemäße wässrige Formulierungen weiter stabilisieren.

Erfindungsgemäße wässrige Formulierungen sind sehr lagerstabil und eignen sich vorzüglich zur Durchführung des erfindungsgemäßen Verfahrens. Ein weiterer Aspekt ist die Verwendung von mindestens einer erfindungsgemäßen wässrigen Formulierung zur Herstellung von Leder. Ein weiterer Aspekt der vorliegenden Erfindung ist ein Verfahren zur Herstellung von Leder unter Verwendung von mindestens einer erfindungsgemäßen Formulierung.

Ein weiterer Aspekt der vorliegenden Erfindung ist die Durchführung des erfindungsgemäßen Verfahrens zur Herstellung von Leder unter Verwendung von mindestens einer erfindungsgemäßen Formulierung. Dazu kann man eine wässrige Flotte bereiten, die man beispielsweise durch Verdünnen von erfindungsgemäßer Formulierung mit Wasser herstellen kann, und auf gegerbte Tierhaut einwirken lassen.

Die Erfindung wird durch Arbeitsbeispiele erläutert.

Die Maesermessungen und die Wasseraufnahme wurden mit einem Bally-Penetrometer durchgeführt. Die Maesermessungen wurden gemäß DIN 35338 jeweils als Doppelbestimmungen durchgeführt. Die statische Wasseraufnahme wurde bei 15% Stauchung durchgeführt und in Gew.-% angegeben, bezogen auf das fertige Leder. Die Färbung wurde durch optische Inspektion begutachtet.

1. Herstellung der Ausgangsmaterialien

1.1 Herstellung einer erfindungsgemäßen Formulierung F.1

100 g eines alternierenden Copolymers (a-1) aus Maleinsäureanhydrid (a1-1) und $\alpha$-n-$C_{18}H_{38}$ (a2-1) mit einem mittlerem Molekulargewicht $M_n$ von 5.000 g/mol wurden in 500 g einer auf 90°C erwärmten wässrigen Natronlauge eingerührt, die pro Maleinsäureanhydrid-Einheit von (a-1) 1,2 Äquivalente Natriumhydroxid enthielt.

Man legte die oben beschriebene Lösung von Natriumsalz von (a-1) in einem Rührgefäß vor und fügte zu

(c-1.1) 15 g eines Oxoalkoholethoxylats (n-$C_{11}H_{23}$-OH, ethoxyliert mit 2,6 Äquivalenten Ethylenoxid), HLB-Wert: 8,
(c-2.1) 15 g eines Oxoalkoholethoxylats (n-$C_{11}H_{23}$-OH, ethoxyliert mit 9,1 Äquivalenten Ethylenoxid), HLB-Wert: 14

und danach

(b-1) 80 g eines Paraffins mit einem Siedebereich von 125 bis 230°C, bestimmt bei Atmosphärendruck, und einer dynamischen Viskosität von 1,44 mPa·s, bestimmt bei 20°C. (b-1) war ein Gemisch von mehreren acyclischen gesättigten Kohlenwasserstoffen, der Anteil an verzweigten acyclischen gesättigten Kohlenwasserstoffen war unter 2 Gew.-% (Gaschromatographie), bezogen auf Gesamtmenge an (b-1).

Man verrührte über einen Zeitraum von 30 Minuten und erhielt erfindungsgemäße wässrige Formulierung F.1 mit einem Feststoffgehalt von 35 Gew.-%. Erfindungsgemäße wässrige Formulierung F.1 enthielt weder native Fette noch Silikon.

1.2 Herstellung einer erfindungsgemäßen Formulierung F.2

100 g alternierendes Copolymer (a-2) aus 1 Äquivalent Maleinsäureanhydrid (a1-1), 0,5 Äquivalenten $\alpha$-n-$C_{16}H_{32}$ (a2-2) und 0,5 $\alpha$-n-$C_{20-24}$-Olefin (a2-3) mit einem mittlerem Molekulargewicht $M_n$ von 6.000 g/mol wurden in 500 g einer auf 90°C erwärmten wässrigen Natronlauge eingerührt, die pro Maleinsäureanhydrid-Einheit von (a-2) 1,2 Äquivalente Natriumhydroxid enthielt.

Man legte die oben beschriebene Lösung von Natriumsalz von (a-2) in einem Rührgefäß vor und fügte zu

(c-1.1) 15 g eines Oxoalkoholethoxylats (n-$C_{11}H_{23}$-OH, ethoxyliert mit 2,6 Äquivalenten Ethylenoxid), HLB-Wert: 8,
(c-2.1) 15 g eines Oxoalkoholethoxylats (n-$C_{11}H_{23}$-OH, ethoxyliert mit 9,1 Äquivalenten Ethylenoxid), HLB-Wert: 14

und danach

(b-1) 80 g eines Paraffins mit einem Siedebereich von 125 bis 230°C, bestimmt bei Atmosphärendruck, und einer dynamischen Viskosität von 1,44 mPa·s, bestimmt bei 20°C. (b-1) war ein Gemisch von mehreren acyclischen gesättigten Kohlenwasserstoffen, der Anteil an verzweigten acyclischen gesättigten Kohlenwasserstoffen war unter 2 Gew.-% (Gaschromatographie), bezogen auf Gesamtmenge an (b-1).

Man verrührte über einen Zeitraum von 30 Minuten und erhielt erfindungsgemäße wässrige Formulierung F.2 mit einem Feststoffgehalt von 35 Gew.-%. Erfindungsgemäße wässrige Formulierung F.2 enthielt weder native Fette noch Silikon.

1.3 Herstellung einer Emulsion einer Silikonverbindung (d-1)

In einem 2-l-Behälter mit Rührer wurden vermischt:

150 g der Silikonverbindung (d-1), kinematische Viskosität 600 $mm^2/s$ bei 23°C, der Formel

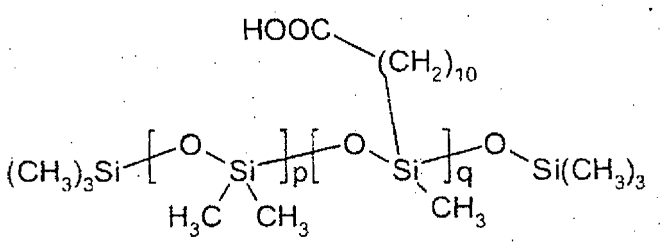

(d.1)

als statistisches Cokondensat mit q = 3 und p = 145 (jeweils Durchschnittswerte) 130 g N-Oleylsarkosin,
15 g NaOH (fest)
153 g Paraffingatsch (36/38°C; Shell)
450 ml Wasser

Die resultierende Emulsion von Silikonverbindung (d-1) hatte einen pH-Wert von 8,5.

2. Behandlung von gegerbter Tierhaut

Angaben in Gew.-% beziehen sich im Folgenden auf das Falzgewicht, wenn nicht anders angegeben.

2.1 Anwendungsbeispiel A

Chromgegerbtes Rindsleder (wet blue) der Falzstärke 2,0 bis 2,2 mm wurde in einem drehbaren Fass mit strömungsbrechenden Einbauten mit 100 Gew.-% Wasser versetzt und mit 2 Gew.-% Natriumformiat und 0,8 Gew.-% $NaHCO_3$ auf einen pH-Wert von 5,3 abgesäuert. Danach wurde mit Wasser gewaschen und danach mit 100 Gew.-% Wasser (35°C) versetzt. Man versetzte mit 4 Gew.-% erfindungsgemäßer Formulierung F.1 und ließ unter gelegentlichem Drehen des Fasses einwirken. Nach einer Einwirkzeit von 40 Minuten gab man 2 Gew.-% eines Harzgerbstoffs (Melamin-Formaldehyd-Kondensationsprodukt) zu und ließ für eine Dauer von 40 Minuten unter gelegentlichem Drehen des Fasses einwirken. Anschließend gab man zu: 3 Gew.-% Sulfongerbstoff aus EP-B 0 459 168, Beispiel K1, und 3 Gew.-% eines handelsüblichen Mimosaextrakts und walkte über eine Dauer von 60 Minuten. Anschließend dosierte man 2 Gew.-% einer 50 Gew.-% (Feststoffgehalt) wässrigen Lösung von Farbstoffen, deren Feststoffe wie folgt zusammengesetzt waren:

70 Gewichtsteile Farbstoff aus EP-B 0 970 148, Beispiel 2.18,
30 Gewichtsteile Acid Brown 75 (Eisenkomplex), Colour Index 1.7.16;

und walkte weitere 60 Minuten. Anschließend gab man 4 Gew.-% Emulsion von Sillkonverbindung (d-1) aus Beispiel 1.2 zu. Man walkte eine weitere Stunde, säuerte mit Ameisensäure auf einen pH-Wert von 3,6 ab und wusch mit Wasser.

Anschließend fixierte man die Färbung durch 90-minütiges Walken in einem Gerbfass in Gegenwart von 3 Gew.-% Chromgerbstoff (basisches Cr(III)sulfat).

Man wusch erneut, reckte mechanisch aus, trocknete und stellte nach an sich bekannten Methoden fertig. Man erhielt erfindungsgemäß hergestelltes Leder L.1.

Zum Vergleich ging man vor wie vorstehend beschrieben, jedoch verwendete man statt erfindungsgemäßer Formulierung F.1 eine gleiche Menge (auf den Feststoff bezogen) an 4 % einer 30 Gew.-% wässrigen, mit NaOH teilneutralisierten Lösung eines Acrylsäure-Homopolymers mit folgenden analytischen Daten: $M_n$ ca. 10.000 g/mol, pH-Wert 5,1. Man erhielt Vergleichsleder V-L.2.

Optischer Vergleich: die Färbung von nach dem erfindungsgemäßen Verfahren hergestellten Leder L.1 war egaler und gleichmäßiger als von V-L.2. Leder L.1 war deutlich weicher und festnarbiger und hatte eine sehr gute Fülle. Weiterhin zeigte es auch nach mehreren Tagen keine Tendenz zum Fogging und zur Wärmevergilbung.

Test nach Maeser:

L.1: ca. 27.000 Knickungen bis zum Wasserdurchtritt,
V-L.2 300 Knickungen bis zum Wasserdurchtritt.

2.2 Anwendungsbeispiel B)

Chromgegerbtes Rindsleder (wet blue) der Falzstärke 1,0 bis 1,2 mm wurde in einem drehbaren Fass mit strömungsbrechenden Einbauten mit 100 Gew.-% Wasser versetzt und mit 2 Gew.-% Natriumformiat und 0,8 Gew.-%

$NaHCO_3$ auf einen pH-Wert von 5,3 abgesäuert. Danach wurde mit Wasser gewaschen und danach mit 100 Gew.-% Wasser (35°C) versetzt. Man versetzte mit 4 Gew.-% erfindungsgemäßer Formulierung F.2 (Zugabe 1) und ließ unter gelegentlichem Drehen des Fasses einwirken. Nach einer Einwirkzeit von 40 Minuten gab man 2 Gew.-% eines Harzgerbstoffs (MelaminFormaldehyd-Kondensationsprodukt) zu und ließ für eine Dauer von 40 Minuten unter gelegentlichem Drehen des Fasses einwirken. Anschließend gab man weitere 8 Gew.-% erfindungsgemäße Formulierung F.2 (Zugabe 2) zu und walkte weitere 60 Minuten. Anschließend säuerte man mit 80 Gew.-% Ameisensäure auf einen pH-Wert von 3,6 ab, walkte weitere 30 Minuten und wusch mit Wasser.

Man reckte mechanisch aus, trocknete und stellte nach an sich bekannten Methoden fertig. Man erhielt erfindungsgemäß hergestelltes Leder L.3.

Zum Vergleich ging man vor wie vorstehend beschrieben, jedoch verwendete man statt erfindungsgemäßer Formulierung F.2 bei der ersten Zugabe 14 Gew.-% einer 30 Gew.-% wässrigen, mit NaOH teilneutralisierten Dispersion (pH-Wert 5,3) von Polymethacrylsäure ($M_w$ 10.000 g). Man erhielt Vergleichsleder V-L.4 und unterließ Zugabe 2.

Optischer Vergleich: Leder L.3 war deutlich voller und festnarbiger als Vergleichsleder V-L.4und hatte eine sehr gute Fülle bei vergleichbarer Weichheit. Weiterhin zeigte es keine Tendenz zum Fogging (Fogging-Werte gravimetrisch 2 - 2,5 mg nach DIN 75201). Die Wärmevergilbung (6 Tage bei 100°C, Beurteilung nach Grauskala) war bei Leder L.3 (Note 6) deutlich geringer als bei Vergleichsleder V-L.4 (Note 2 - 3).

## Patentansprüche

**1.** Verfahren zur Herstellung von Leder, **dadurch gekennzeichnet, dass** man gegerbte Tierhäute in Schritt (A) mit einer wässrigen Flotte behandelt, die enthält

(a) mindestens ein Copolymer, erhältlich durch Copolymerisation von (a1) mindestens einer ethylenisch ungesättigten $C_4$-$C_8$-Dicarbonsäure oder mindestens eines Derivats einer ethylenisch ungesättigten $C_4$-$C_8$-Dicarbonsäure und
(a2) mindestens eines $C_8$-$C_{100}$-$\alpha$-Olefins
und gegebenenfalls Hydrolyse und/oder zumindest partielle Neutralisation, (b) mindestens ein bei Zimmertemperatur flüssiges Paraffin,
(c) mindestens einen synthetischen nichtionischen Emulgator,

und wobei die wässrige Flotte frei ist von Silikonen.

**2.** Verfahren nach Anspruch 1, **dadurch gekennzeichnet, dass** man mindestens zwei synthetische nichtionische Emulgatoren (c1) und (c2) einsetzt.

**3.** Verfahren nach Anspruch 1 oder 2, **dadurch gekennzeichnet, dass** man im Anschluss an Herstellung nach Schritt (A) in Schritt (B) mindestens eine Silikonverbindung (d) zusetzt.

**4.** Verfahren nach einem der Ansprüche 1 bis 3, **dadurch gekennzeichnet, dass** Copolymer (a) ein Molekulargewicht $M_w$ im Bereich von 800 bis 50.000 g/mol aufweist.

**5.** Verfahren nach einem der Ansprüche 1 bis 4, **dadurch gekennzeichnet, dass** mindestens ein synthetischer nichtionischer Emulgator (c) gewählt wird aus mehrfach alkoxylierten Fettalkoholen und mehrfach alkoxylierten Oxoalkoholen.

**6.** Silikonfreie und von nativen Fetten freie wässrige Formulierung, enthaltend im Bereich von 5 bis 40 Gew.-% Copolymer (a), erhältlich durch Copolymerisation von

(a1) mindestens einer ethylenisch ungesättigten $C_4$-$C_8$-Dicarbonsäure oder mindestens einem Derivat einer ethylenisch ungesättigten $C_4$-$C_8$-Dicarbonsäure und
(a2) mindestens einem $C_8$-$C_{100}$-$\alpha$-Olefin
und gegebenenfalls Hydrolyse und/oder zumindest partielle Neutralisation,

im Bereich von 0,1 bis 30 Gew.-% bei Zimmertemperatur flüssiges Paraffin (b) und
im Bereich von insgesamt 0,5 bis 10 Gew.-% synthetischen nichtionischen Emulgator (c)
wobei Angaben in Gew.-% jeweils auf die gesamte Formulierung bezogen sind.

7. Verfahren zur Herstellung von Formulierungen nach Anspruch 6, **dadurch gekennzeichnet, dass** man

(a) mindestens ein Copolymer, erhältlich durch Copolymerisation von
(a1) mindestens einer ethylenisch ungesättigten $C_4$-$C_8$-Dicarbonsäure oder mindestens einem Derivat einer ethylenisch ungesättigten $C_4$-$C_8$-Dicarbonsäure und
(a2) mindestens einem $C_8$-$C_{100}$-$\alpha$-Olefin und gegebenenfalls Hydrolyse und/oder zumindest partielle Neutralisation,
(b) mindestens ein bei Zimmertemperatur flüssiges Paraffin
(c) mindestens einen synthetischen nichtionischen Emulgator, miteinander vermischt.

8. Verwendung von mindestens einer Formulierung nach Anspruch 6 zur Herstellung von Leder.

9. Verfahren zur Herstellung von Leder unter Verwendung von mindestens einer Formulierung nach Anspruch 6.

10. Verfahren zur Herstellung von Leder nach einem der Ansprüche 1 bis 5 unter Verwendung von mindestens einer Formulierung nach Anspruch 6.

**Claims**

1. A process for the production of leather, wherein tanned animal hides are treated in step (A) with an aqueous liquor which comprises

(a) at least one copolymer obtainable by copolymerization of
(a1) at least one ethylenically unsaturated $C_4$-$C_8$-dicarboxylic acid or at least one derivative of an ethylenically unsaturated $C_4$-$C_8$-dicarboxylic acid and
(a2) at least one $C_8$-$C_{100}$-$\alpha$-olefin and, optionally hydrolysis and/or at least partial neutralization,
(b) at least one paraffin which is liquid at room temperature,
(c) at least one synthetic nonionic emulsifier, the aqueous liquor being free of silicones.

2. The process according to claim 1, wherein at least two synthetic nonionic emulsifiers (c1) and (c2) are used.

3. The process according to claim 1 or 2, wherein at least one silicone compound (d) is added in step (B) after preparation according to step (A).

4. The process according to any of claims 1 to 3, wherein copolymer (a) has a molecular weight $M_w$ in the range from 800 to 50 000 g/mol.

5. The process according to any of claims 1 to 4, wherein at least one synthetic nonionic emulsifier (c) is selected from polyalkoxylated fatty alcohols and polyalkoxylated oxo alcohols.

6. A silicone-free aqueous formulation free of natural fats, comprising
in the range from 5 to 40% by weight of copolymer

(a) obtainable by copolymerization of

(a1) at least one ethylenically unsaturated $C_4$-$C_8$-dicarboxylic acid or at least one derivative of an ethylenically unsaturated $C_4$-$C_8$-dicarboxylic acid and
(a2) at least one $C_8$-$C_{100}$-$\alpha$-olefin

and optionally hydrolysis and/or at least partial neutralization,
in the range from 0.1 to 30% by weight of paraffin
(b) liquid at room temperature, and
in the range of altogether from 0.5 to 10% by weight of synthetic nonionic emulsifier (c),
data in % by weight being based in each case on the total formulation.

7. A process for the preparation of formulations according to claim 6, wherein

(a) at least one copolymer obtainable by copolymerization of

(a1) at least one ethylenically unsaturated $C_4$-$C_8$-dicarboxylic acid or at least one derivative of an ethylenically unsaturated $C_4$-$C_8$-dicarboxylic acid and
(a2) at least one $C_8$-$C_{100}$-$\alpha$-olefin
and optionally hydrolysis and/or at least partial neutralization,

(b) at least one paraffin which is liquid at room temperature,
(c) at least one synthetic nonionic emulsifier,
are mixed with one another.

**8.** The use of at least one formulation according to claim 6 for the production of leather.

**9.** A process for the production of leather using at least one formulation according to claim 6.

**10.** The process for the production of leather according to any of claims 1 to 5 using at least one formulation according to claim 6.

## Revendications

**1.** Procédé de fabrication de cuir, **caractérisé en ce que** des peaux animales tannées sont traitées à l'étape (A) avec une liqueur aqueuse, qui contient

(a) au moins un copolymère, pouvant être obtenu par copolymérisation de

(a1) au moins un acide dicarboxylique en $C_4$-$C_8$ éthyléniquement insaturé ou au moins un dérivé d'un acide dicarboxylique en $C_4$-$C_8$ éthyléniquement insaturé, et
(a2) au moins une $\alpha$-oléfine en $C_8$-$C_{100}$

et éventuellement hydrolyse et/ou neutralisation au moins partielle,
(b) au moins une paraffine liquide à température ambiante,
(c) au moins un émulsifiant non ionique synthétique,
la liqueur aqueuse étant exempte de silicones.

**2.** Procédé selon la revendication 1, **caractérisé en ce qu'**au moins deux émulsifiants non ioniques synthétiques (c1) et (c2) sont utilisés.

**3.** Procédé selon la revendication 1 ou 2, **caractérisé en ce qu'**au moins un composé de silicone (d) est ajouté après la fabrication selon l'étape (A) à l'étape (B).

**4.** Procédé selon l'une quelconque des revendications 1 à 3, **caractérisé en ce que** le copolymère (a) présente un poids moléculaire $M_w$ dans la plage allant de 800 à 50 000 g/mol.

**5.** Procédé selon l'une quelconque des revendications 1 à 4, **caractérisé en ce qu'**au moins un émulsifiant non ionique synthétique (c) est choisi parmi les alcools gras polyalcoxylés et les oxoalcools polyalcoxylés.

**6.** Formulation aqueuse exempte de silicones et exempte de matières grasses naturelles, contenant dans la plage allant de 5 à 40 % en poids d'un copolymère (a), pouvant être obtenu par copolymérisation de

(a1) au moins un acide dicarboxylique en $C_4$-$C_8$ éthyléniquement insaturé ou au moins un dérivé d'un acide dicarboxylique en $C_4$-$C_8$ éthyléniquement insaturé, et
(a2) au moins une $\alpha$-oléfine en $C_8$-$C_{100}$

et éventuellement hydrolyse et/ou neutralisation au moins partielle,
dans la plage allant de 0,1 à 30 % en poids d'une paraffine (b) liquide à température ambiante, et
dans la plage allant d'au total 0,5 à 10 % en poids d'un émulsifiant non ionique synthétique (c),
les proportions en % en poids se rapportant à chaque fois à la formulation totale.

**7.** Procédé de fabrication de formulations selon la revendication 6, **caractérisé en ce que**

(a) au moins un copolymère, pouvant être obtenu par copolymérisation de

(a1) au moins un acide dicarboxylique en $C_4$-$C_8$ éthyléniquement insaturé ou au moins un dérivé d'un acide dicarboxylique en $C_4$-$C_8$ éthyléniquement insaturé, et
(a2) au moins une $\alpha$-oléfine en $C_8$-$C_{100}$

et éventuellement hydrolyse et/ou neutralisation au moins partielle,
(b) au moins une paraffine liquide à température ambiante,
(c) au moins un émulsifiant non ionique synthétique, sont mélangés les uns avec les autres.

**8.** Utilisation d'au moins une formulation selon la revendication 6 pour la fabrication de cuir.

**9.** Procédé de fabrication de cuir utilisant au moins une formulation selon la revendication 6.

**10.** Procédé de fabrication de cuir selon l'une quelconque des revendications 1 à 5 utilisant au moins une formulation selon la revendication 6.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 2629748
- DE 3926167 A1
- WO 9520056 A
- WO 9522627 A
- EP 0324345 A
- DE 4240274 A
- EP 638128 A
- WO 9821369 A
- EP 1510554 A
- EP 0095676 A
- EP 0299596 A
- EP 0415204 A
- EP 0459168 B
- EP 0970148 B


### In der Beschreibung aufgeführte Nicht-Patentliteratur


- **H. STACHE.** Tensidtaschenbuch. Carl Hanser Verlag, 1981